# EUROPÄISCHE PATENTSCHRIFT

(11) **EP 2 034 190 B1**
(45) Veröffentlichungstag und Bekanntmachung des Hinweises auf die Patenterteilung: **28.11.2012**
(21) Anmeldenummer: 08162879.4
(22) Anmeldetag: 25.08.2008
(51) Int. Cl.: F15B 15/28, F16F 9/32

(54) **Sensorhalterung für ein Kolben-Zylinderaggregat**
Sensor holder for a piston cylinder device
Fixation de capteur pour un agrégat de cylindre à piston

(30) Priorität: 10.09.2007 DE 102007042850; 05.08.2008 DE 102008040983
(43) Veröffentlichungstag der Anmeldung: 11.03.2009
(73) Patentinhaber: ZF Friedrichshafen AG, 88038 Friedrichshafen (DE)
(72) Erfinder: Memmel, Alfred, 97453 Schonungen (DE); Nowotka, Thomas, 97539 Wonfurt (DE)

(56) Entgegenhaltungen:
- DE-A1- 3 643 290
- DE-A1-102004 038 691
- DE-U1- 8 315 785
- DE-U1- 29 718 934

## Beschreibung

Die Erfindung betrifft eine Sensorhalterung für ein Kolben-Zylinderaggregat gemäß dem Oberbegriff von Patentanspruch 1.

Aus der DE 10 2004 038 691 A1 ist ein Kolben-Zylinderaggregat mit einem Weg-Mess-System bekannt, bei dem eine zylinderseitige Positionsmesseinrichtung und eine außerhalb und achsparallel zur Kolbenstange verlaufende Positionsmesseinrichtung zur Anwendung kommt, die in Kombination ein Wegsignal bilden. Die zylinderseitige Positionsmesseinrichtung ist in einer kappenförmigen Halterung fixiert, die Führungsflächen für die achsparallele Positionsmesseinrichtung innerhalb eines Schutzrohres aufweist. Über die Führungsflächen wird eine drehorientierte Einbaulage des Schutzrohres zum Zylinder und damit der beiden Positionsmesseinrichtungen erreicht. Diese an sich gute Lösung bringt jedoch den Nachteil mit sich, dass das Schutzrohr über die Führungsflächen in Reibkontakt mit der Halterung steht, wobei Schmutz und Feuchtigkeit die Randbedingungen noch verschlechtern können.

Die Aufgabe der vorliegenden Erfindung besteht darin, eine Halterung für eine Sensorik bereitzustellen, bei der eine drehorientierte Ausrichtung zweier Positionsmesseinrichtungen in Verbindung mit minimalen Reibungskräften vorliegt.

Erfindungsgemäß wird die Aufgabe dadurch gelöst, dass die zylinderseitige Halterung und das Halteelement rotatorisch zueinander verdrehbar sind und eine zwischen der Halterung und dem Haltelement wirkende Magnetkraft eine rotatorische Ausrichtung beider Positionsmesseinrichtung zueinander bewirkt.

Der große Vorteil der Erfindung besteht darin, dass kein direkter Kontakt zwischen den beiden Positionsmesseinrichtungen bzw. den diese tragenden Bauteile bestehen muss. Das gesamte Positionsmesssystem richtet sich selbsttätig aus. Dieses Prinzip führt zu vereinfachten Bauteilen und einer geringeren Reibung am Kolben-Zylinderaggregat im Vergleich zum genannten Stand der Technik.

Dabei ist vorgesehen, dass die zylinderseitige Halterung als ein Ring ausgeführt ist, der drehbar am Zylinder gelagert ist. Die Ringform erlaubt eine völlige Freiheit hinsichtlich der Drehorientierung bei der Montage der Halterung. Die zylinderseitige Positionsmesseinrichtung kann dann auch bei einem sehr großen Verdrehfehler die definierte Drehorientierung einnehmen.

Gemäß einem vorteilhaften Unteranspruch ist die zylinderseitige Halterung auf der Mantelfläche des Zylinders gelagert. Die Stirnseite des Zylinders kann z. B. für einen an sich bekannten Anschlagpuffer genutzt werden.

Vorteilhafterweise ist an dem Ring ein Magnet befestigt ist, der mit einem Magneten an dem Halteelement der ersten Positionsmesseinrichtung zusammenwirkt. Die Verwendung von einfachen Permanentmagneten erübrigt die Verlegung von Kabelverbindungen und führt zu einfach zu handhabenden Bauteilen.

Um ggf. auftretende Störungen des gesamten Positionsmesssystems zu vermeiden, sind die beiden Magneten auf dem den Positionsmesseinrichtungen gegenüberliegenden Bereich der zylinderseitigen Halterung ausgerichtet.

Zur Optimierung der Drehfunktion der Halterung weist diese einen zylinderseitig fixierten Lagerring auf, auf dem ein die zweite Positionsmesseinrichtung tragender Drehring angeordnet ist. Etwaige Ungenauigkeiten der Zylinderoberfläche beeinträchtigen nicht die Lagerqualität für den Drehring. Der Lagerring kann z. B. aus einem reibungsarmen Kunststoff bestehen.

Prinzipiell kann man den Lagerring auch direkt mit dem Zylinder verbinden. Fertigungstechnisch günstiger ist es aber, wenn der Lagerring von einem Sicherungsring axial zum Zylinder gehalten wird.

In weiterer vorteilhafter Ausgestaltung der Erfindung wird das Halteelement für die erste Positionsmesseinrichtung von einem Schutzrohr für die Kolbenstange gebildet, wobei das Halteelement mit einem in Hubrichtung der Kolbenstange ausgerichteten Metallstreifen als Magnet bestückt ist. Der Metallstreifen bewirkt eine über den gesamten Hub der Kolbenstange drehorientierte Ausrichtung der beiden Positionsmesseinrichtungen.

Anhand der folgenden Figurenbeschreibung soll die Erfindung näher erläutert werden.

Es zeigt:
- Fig. 1: Längsschnitt durch ein Positionsmesssystem an einem Kolben-Zylinderaggregat
- Fig. 2: Querschnitt durch ein Kolben-Zylinderaggregat nach Fig. 1

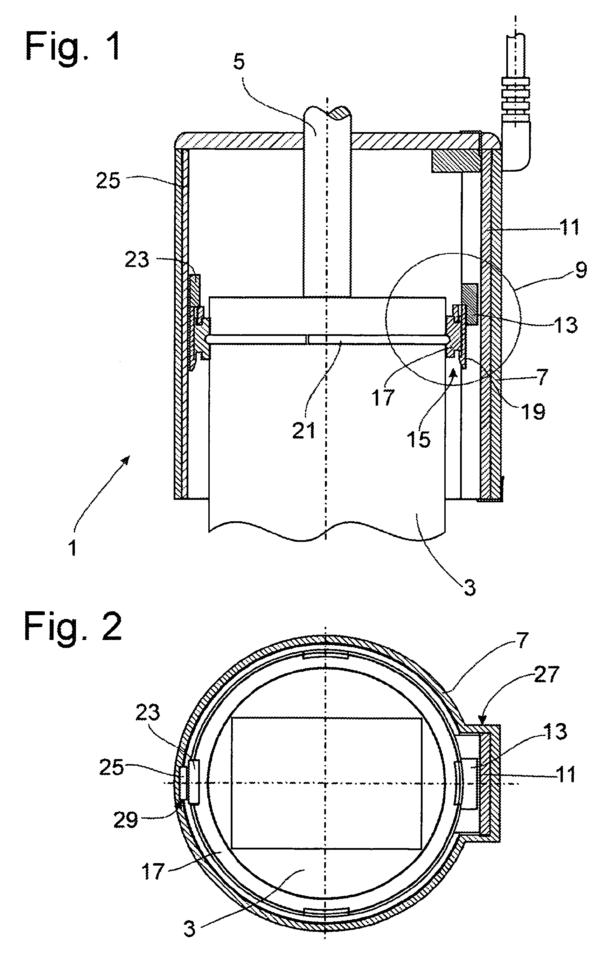

Die Zusammenschau der Fig. 1 und 2 zeigt einen Ausschnitt von einem Kolben-Zylinderaggregat 1, das einen Zylinder 3 aufweist, in dem eine Kolbenstange 5 axial beweglich geführt ist. Die Kolbenstange 5 wird von einem Schutzrohr 7 eingehüllt, das eine synchrone Bewegung mit der Kolbenstange ausführt.

Das Kolben-Zylinderaggregat 1 ist mit einem Positionsmess-System 9 bestückt, das zwei axial zueinander bewegliche Positionsmesseinrichtungen 11; 13 umfasst. Eine erste Positionsmesseinrichtung 11 ist an dem Schutzrohr 7 als Halteelement fixiert. An dem Zylinder 3, präzise an der Mantelfläche des Zylinders 3, ist eine Halterung 15 für eine zweite Positionsmesseinrichtung befestigt. Die Halterung 15 ist als Ring ausgeführt, der drehbar am Zylinder 3 gelagert ist und einen zylinderseitig fixierten Lagerring 17 aufweist, auf dem ein die zweite Positionsmesseinrichtung 13 tragender Drehring 19 angeordnet ist. Der Lagerring 17 wird wiederum von einem Sicherungsring 21 axial zum Zylinder 3 gehalten. Der Lagerring besteht bevorzugt aus einem reibungsoptimierten Kunststoff, z. B. POM. Durch diese indirekte Lagerung des Drehrings 19 werden Maß- und Formabweichungen des Zylinders 3 kompensiert.

An dem Drehring 19 ist ein Magnet 23 befestigt, der mit einem Magneten 25 der ersten Positionsmesseinrichtung 11, bzw. dem Schutzrohr 7 zusammenwirkt. Der Magnet 23 ist auf der den Positionsmesseinrichtungen gegenüberliegenden Bereich der zylinderseitigen Halterung bzw. dem Drehring 19 ausgerichtet, um einen maximalen Abstand zu den Positionsmesseinrichtungen 11; 13 zu erreichen. Wie aus der Fig. 1 ersichtlich ist, wird der an dem Schutzrohr 7 befestigte Magnet 25 von einem in Hubrichtung der Kolbenstange 5 ausgerichteten Metallstreifen mit magnetischen Eigenschaften gebildet.

Bei der Montage wird das Kolben-Zylinderaggregat 1 mit dem Sicherungsring 21 bestückt. Anschließend lässt man den Lagerring 17 auf den Sicherungsring 21 aufschnappen. Der Lagerring 17 trägt bereits den Drehring 19 mit der zweiten Positionsmessseinrichtung 13 und dem Magneten 23. Eine grobe Drehausrichtung des Drehrings 19 ist nur dann erforderlich, wenn zwischen dem Schutzrohr 7 und dem Zylinder 3 ein derart geringer radialer Abstand besteht wie in dem dargestellten Ausführungsbeispiel.

Das Schutzrohr verfügt ggf. über eine rinnenförmige Aufnahme 27 für die erste leistenförmige Positionsmesseinrichtung 11. Der magnetische Metallstreifen 25 sollte vor der Montage des Schutzrohres 7 an seinen vorbestimmten Platz montiert sein. In der Fig. 2 ist zu erkennen, dass auch für den Magneten 25 eine Aufnahmenut 29 im Schutzrohr 7 vorgesehen ist. Sobald das Schutzrohr 7 mit der ersten Positionsmesseinrichtung 11 auf den Zylinder 3 gefädelt wird, werden die beiden Magnete 23; 25 mit ungleicher Polung wirksam, deren sich anziehende Magnetkräfte dafür sorgt, dass sich die Halterung 15 mit der zweiten Positionsmesseinrichtung 13 rotatorisch zum Schutzrohr 7 mit der ersten Positionsmesseinrichtung ausrichtet, wobei die rotatorische Verdrehbarkeit der zylinderseitigen Halterung 15 zur kolbenstangenseitigen Halterung für die erste Positionsmesseinrichtung 11, nämlich dem Schutzrohr 7, ausgenutzt wird. Wie in der Fig. 2 ersichtlich ist, besteht kein Kontakt zwischen der Halterung 15 und dem Schutzrohr 7.

## Patentansprüche

1. Sensorhalterung für ein Kolben-Zylinderaggregat (1) mit einem Zylinder (3) und einer dazu beweglichen Kolbenstange (5), umfassend ein Halteelement (7), das eine synchrone Bewegung mit der Kolbenstange (5) ausführt und eine erste Positionsmesseinrichtung (11) trägt, wobei eine zweite Positionsmesseinrichtung (13) über eine Halterung (15) axial ortsfest zum Zylinder (3) gehalten wird und zwischen der ersten und der zweiten Positionsmesseinrichtung (11; 13) eine verdrehorientierte Einbaulage besteht,
**dadurch gekennzeichnet,**
**dass** die zylinderseitige Halterung (15) und das Halteelement (7) rotatorisch zueinander verdrehbar sind und eine zwischen der Halterung (15) und dem Haltelement (7) wirkende Magnetkraft eine rotatorische Ausrichtung beider Positionsmesseinrichtung (11; 13) zueinander bewirkt.

2. Sensorhalterung nach Anspruch 1,
**dadurch gekennzeichnet,**
**dass** die zylinderseitige Halterung (15) als ein Ring (19) ausgeführt ist, der drehbar am Zylinder (3) gelagert ist.

3. Sensorhalterung nach Anspruch 2,
**dadurch gekennzeichnet,**
**dass** die zylinderseitige Halterung (15) auf der Mantelfläche des Zylinders (3) gelagert ist.

4. Sensorhalterung nach Anspruch 2,
**dadurch gekennzeichnet,**
**dass** an dem Ring (19) ein Magnet (23) befestigt ist, der mit einem Magneten (25) des Halteelements (7) der ersten Positionsmesseinrichtung (11) zusammenwirkt.

5. Sensorhalterung nach Anspruch 4,
**dadurch gekennzeichnet,**
**dass** die beiden Magneten (23; 25) auf dem den Positionsmesseinrichtungen (11; 13) gegenüberliegenden Bereich der zylinderseitigen Halterung (15) ausgerichtet sind.

6. Sensorhalterung nach Anspruch 2,
**dadurch gekennzeichnet,**
**dass** die Halterung (15) einen zylinderseitig fixierten Lagerring (17) aufweist, auf dem ein die zweite Positionsmesseinrichtung (13) tragender Drehring (19) angeordnet ist.

7. Sensorhalterung nach Anspruch 6,
**dadurch gekennzeichnet,**
**dass** der Lagerring (17) von einem Sicherungsring (21) axial zum Zylinder (3) gehalten wird.

8. Sensorhalterung nach Anspruch 1,
**dadurch gekennzeichnet,**
**dass** das Halteelement (7) für die erste Positionsmesseinrichtung (11) von einem Schutzrohr für die Kolbenstange (5) gebildet wird, wobei das Halteelement (7) mit einem in Hubrichtung der Kolbenstange (5) ausgerichteten Metallstreifen als Magnet (25) bestückt ist.

## Claims

1. Sensor holder for a piston/cylinder assembly (1) having a cylinder (3) and a piston rod (5) which can move in relation to said cylinder, comprising a holding element (7) which executes a synchronous movement with the piston rod (5) and is fitted with a first position measuring device (11), with a second position measuring device (13) being held in an axially fixed manner in relation to the cylinder (3) by means of a holder (15) and there being a rotationally oriented installation position between the first and the second position measuring device (11; 13),
**characterized**
**in that** the cylinder-end holder (15) and the holding element (7) can be rotated in relation to one another in a rotary manner and a magnetic force which acts between the holder (15) and the holding element (7) rotationally orients the two position measuring devices (11; 13) in relation to one another.

2. Sensor holder according to Claim 1,
**characterized**
**in that** the cylinder-end holder (15) is designed as a ring (19) which is rotatably mounted on the cylinder (3).

3. Sensor holder according to Claim 2,
**characterized**
**in that** the cylinder-end holder (15) is mounted on the casing surface of the cylinder (3).

4. Sensor holder according to Claim 2,
**characterized**
**in that** a magnet (23) is attached to the ring (19), the said magnet interacting with a magnet (25) of the holding element (7) of the first position measuring device (11).

5. Sensor holder according to Claim 4,
**characterized**
**in that** the two magnets (23; 25) are oriented towards that region of the cylinder-end holder (15) which is situated opposite the position measuring devices (11; 13).

6. Sensor holder according to Claim 2,
**characterized**
**in that** the holder (15) has a bearing ring (17) which is fixed at the cylinder end and on which a rotary ring (19) which is fitted with the second position measuring device (13) is arranged.

7. Sensor holder according to Claim 6,
**characterized**
**in that** the bearing ring (17) is held axially in relation to the cylinder (3) by a securing ring (21).

8. Sensor holder according to Claim 1,
**characterized**
**in that** the holding element (7) for the first position measuring device (11) is formed by a protective tube for the piston rod (5), with the holding element (7) being fitted with a metal strip, which is oriented in the movement direction of the piston rod (5), as a magnet (25).

## Revendications

1. Fixation de capteur pour une unité cylindre-piston (1) comprenant un cylindre (3) et une tige de piston (5) déplaçable par rapport à celui-ci, comprenant un élément de fixation (7) qui effectue un mouvement synchrone avec la tige de piston (5) et qui porte un premier dispositif de mesure de position (11), un deuxième dispositif de mesure de position (13) étant maintenu de manière fixe axialement par rapport au cylindre (3) par le biais d'une fixation (15) et une position de montage orientée de manière rotative existant entre le premier et le deuxième dispositif de mesure de position (11 ; 13),
**caractérisée en ce que**
la fixation (15) du côté du cylindre et l'élément de fixation (7) peuvent tourner de manière rotative l'un par rapport à l'autre et une force magnétique agissant entre la fixation (15) et l'élément de fixation (7) provoque une orientation rotative des deux dispositifs de mesure de position (11 ; 13) l'un par rapport à l'autre.

2. Fixation de capteur selon la revendication 1,
**caractérisée en ce que**
la fixation (15) du côté du cylindre est réalisée sous forme de bague (19) qui est montée de manière rotative sur le cylindre (3).

3. Fixation de capteur selon la revendication 2,
**caractérisée en ce que**
la fixation (15) du côté du cylindre est supportée sur la surface d'enveloppe du cylindre (3).

4. Fixation de capteur selon la revendication 2,
**caractérisée en ce**
**qu'**un aimant (23) est fixé sur la bague (19), lequel coopère avec un aimant (25) de l'élément de fixation (7) du premier dispositif de mesure de position (11).

5. Fixation de capteur selon la revendication 4,
**caractérisée en ce que**
les deux aimants (23 ; 25) sont orientés vers la région de la fixation (15) du côté du cylindre qui est opposée aux dispositifs de mesure de position (11 ; 13).

6. Fixation de capteur selon la revendication 2,
**caractérisée en ce que**
la fixation (15) présente une bague de palier (17) fixée du côté du cylindre, sur laquelle est disposée une bague rotative (19) portant le deuxième dispositif de mesure de position (13).

7. Fixation de capteur selon la revendication 6,
**caractérisée en ce que**
la bague de palier (17) est maintenue axialement par rapport au cylindre (3) par une bague de fixation (21).

8. Fixation de capteur selon la revendication 1,
**caractérisée en ce que**
l'élément de fixation (7) pour le premier dispositif de mesure de position (11) est formé par un tube de protection pour la tige de piston (5), l'élément de fixation (7) étant muni d'un ruban métallique en tant qu'aimant (25), orienté dans la direction de levage de la tige de piston (5).
